# EUROPEAN PATENT APPLICATION

(11) **EP 4 472 225 A1**
(43) Date of publication of application: **04.12.2024**
(21) Application number: 24174017.4
(22) Date of filing: 03.05.2024
(51) Int. Cl.: H04N 25/40, H04N 25/773

(54) **PHOTOELECTRIC CONVERSION APPARATUS, MOVABLE APPARATUS, CONTROL METHOD, AND STORAGE MEDIUM**

(30) Priority: 30.05.2023 JP 2023088760
(71) Applicant: CANON KABUSHIKI KAISHA, Tokyo 146-8501 (JP)
(72) Inventor: KIMURA, Takayuki, Tokyo, 146-8501 (JP)
(74) Representative: TBK

(57) **Abstract**

A photoelectric conversion apparatus comprises a plurality of pixels, each provided with a sensor unit configured to generate pulses corresponding to photons, a counter that counts the number of pulses, and a memory that stores a count value of the counter, a recognition unit configured to perform recognition processing on an image signal generated based on the difference in the count values of the counter at a start time and an end time of an accumulation period, and a control unit configured to output the results of the recognition processing.

## Description

### BACKGROUND OF THE INVENTION

### Field of the Invention

The present invention relates to a photoelectric conversion apparatus, a movable apparatus, a control method, a storage medium, and the like.

### Description of the Related Art

In recent years, a photoelectric conversion apparatus has been developed that digitally counts the number of photons incident on an avalanche photodiode, and outputs the counted value as a photoelectrically converted digital signal from a pixel.

Japanese Patent No. 7223070 discloses a configuration in which a photoelectric conversion apparatus having an APD can output a plurality of images in which accumulation periods overlap each other, thereby enabling continuous shooting even at low light levels.

However, in the configuration of Japanese Patent No. 7223070, in a case in which the image capturing element of an in-vehicle camera installed in a movable apparatus is assumed, for example, because recognition processing is applied frame by frame under normal sensor driving, recognition processing can only be executed every 33.3ms in the case of, for example, 30fps. Therefore, in an in-vehicle camera, even if an object enters a frame immediately after a frame change, recognition processing cannot be performed until the end of the frame.

In addition, in an in-vehicle camera, to suppress flicker caused by traffic signals, the accumulation period is often set to at least a certain duration (11ms) or more, and especially under low light conditions, this accumulation period is lengthened so as to capture images brightly. However, because the accumulation period is long, subject blur is generated in objects that move at high speed, the recognition rate decreases, and in addition, there is the problem of not being able to promptly obtain recognition processing results.

### SUMMARY OF THE INVENTION

A photoelectric conversion apparatus according to one aspect of the invention comprises a plurality of pixels, each provided with a sensor unit configured to generate pulses corresponding to photons, a counter that counts the number of pulses, and a memory that stores a count value of the counter; and a recognition unit configured to perform recognition processing on an image signal generated based on the difference in the count value of the counter at a start time and an end time of an accumulation period; and a control unit configured to output the results of the recognition processing.

Further features of the present invention will become apparent from the following description of embodiments with reference to the attached drawings.

### BRIEF DESCRIPTION OF THE DRAWINGS

FIG. 1 is a diagram showing a configuration example of a photoelectric conversion element according to an embodiment of the present invention.
FIG. 2 is a diagram showing a configuration example of a sensor substrate 11.
FIG. 3 is a diagram showing a configuration example of a circuit substrate 21.
FIG. 4 is a diagram showing an example of an equivalent circuit of a pixel 101 and a signal processing circuit 103 corresponding to the pixel 101 in FIG. 2 and FIG. 3.
FIG. 5 is a diagram schematically showing the relationship between the operation of an APD 201 and an output signal.
FIG. 6 is a functional block diagram of a photoelectric conversion apparatus 600 and a movable apparatus 700 according to the embodiment.
FIG. 7 is a diagram for explaining a processing example of photoelectric conversion by a camera control unit 605 according to the embodiment.
FIG. 8 is a diagram for explaining an example of the recognition processing by the camera control unit 605 according to the embodiment.
FIGS. 9A to 9C are diagrams for explaining the recognition processing by a recognition unit 604 according to the embodiment.
FIG. 10 is a diagram showing examples of images of a plurality of divided frames.
FIG. 11 is a diagram showing the relationship between the memory circuits and the buffers according to the embodiment.
FIG. 12 is a flowchart showing the details of a driving example of a photoelectric conversion element according to the embodiment.
FIG. 13 is a continuation of the flowchart of FIG. 12.
FIG. 14 is a diagram for explaining an example of a specific control method of the movable apparatus 700 by an ECU 701 according to the embodiment.
FIG. 15 is a flowchart showing a control method example of subject recognition according to the embodiment.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

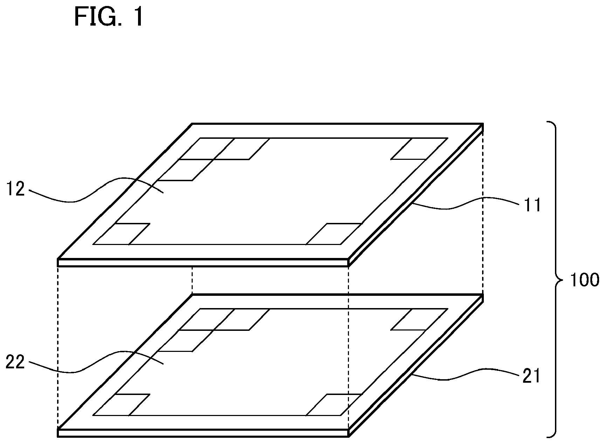

FIG. 1 is a diagram showing a configuration example of a photoelectric conversion element according to an embodiment of the present invention. In the following, a photoelectric conversion element 100 will be explained by way of example as a photoelectric conversion apparatus that is a so-called "stacked structure", configured by stacking and electrically connecting two substrates, the sensor substrate 11 and a circuit substrate 21.

However, the photoelectric conversion element may also be a so-called "non-stacked structure", wherein the configurations included in the sensor substrate and the circuit substrate are arranged in a common semiconductor layer. The sensor substrate 11 includes a pixel region 12. The circuit substrate 21 includes a circuit region 22 configured to process signals detected by the pixel region 12.

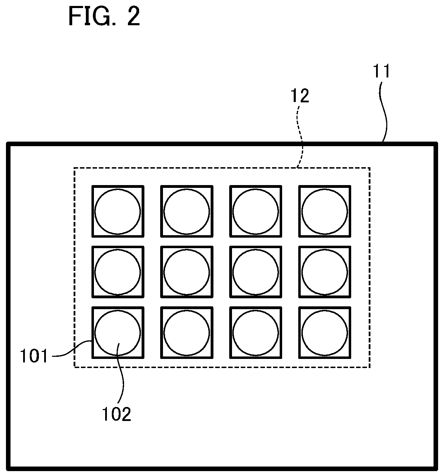

FIG. 2 is a diagram showing a configuration example of the sensor substrate 11. The pixel region 12 of the sensor substrate 11 includes a plurality of pixels 101 arranged in two dimensions in a plurality of rows and a plurality of columns. Each pixel 101 is provided with a photoelectric conversion unit 102 that includes an avalanche photodiode (hereinafter referred to as an "APD").

Here, the photoelectric conversion unit 102 functions as a sensor unit that generates pulses at a frequency corresponding to a frequency at which photons are incident. It should be noted that the number of rows and number of columns of the pixel array that form the pixel region 12 is not particularly limited.

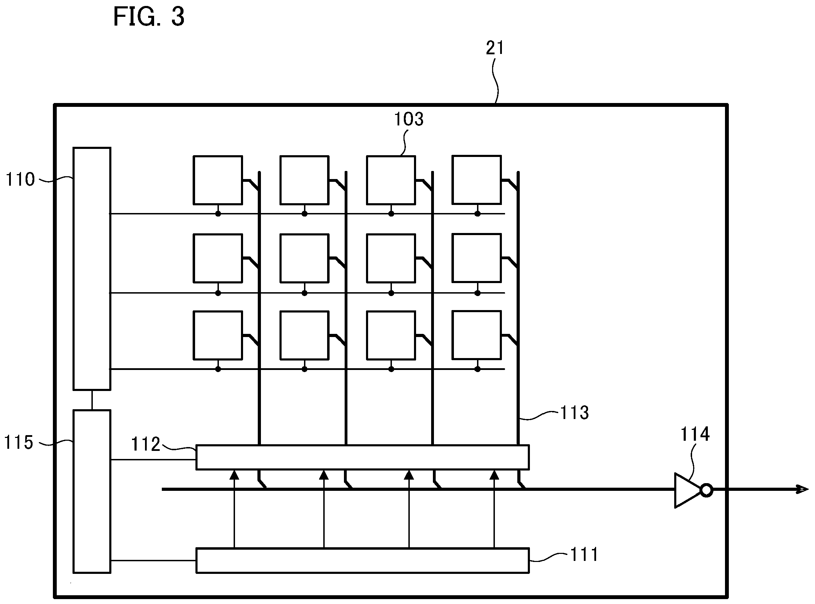

FIG. 3 is a diagram showing a configuration example of the circuit substrate 21. The circuit substrate 21 includes signal processing circuits 103 that process charges photoelectrically converted by each photoelectric conversion unit 102 shown in FIG. 2, a reading circuit 112, a control pulse generation unit 115, a horizontal scanning circuit 111, vertical signal lines 113, a vertical scanning circuit 110, and an output circuit 114.

The vertical scanning circuit 110 receives control pulses supplied from the control pulse generation unit 115 and sequentially supplies the control pulses to a plurality of pixels arranged in the row direction, for each row in sequence. A logic circuit such as a shift register or an address decoder is used for the vertical scanning circuit 110.

A signal output from the photoelectric conversion unit 102 of each pixel is processed by each respective signal processing circuit 103. A signal processing circuit 103 is provided with a counter and a memory, wherein the memory holds a digital value. The horizontal scanning circuit 111 inputs a control pulse for sequentially selecting each column to the signal processing unit 103 in order to read the signal from the memory of each pixel holding the digital signal.

The signal from the signal processing circuit 103 of the pixels of the row selected by the vertical scanning circuit 110 is output to the vertical signal line 113. The signal output to the vertical signal line 113 is then output to the outside of the photoelectric conversion element 100 via the reading circuit 112 and the output circuit 114. The reading circuit 112 incorporates a plurality of buffers, wherein each buffer is connected to a corresponding vertical signal line 113.

As shown in FIG. 2 and FIG. 3, in a plan view, a plurality of signal processing circuits 103 are arranged in the region that overlaps with the pixel region 12. Then, in the plan view, the vertical scanning circuit 110, the horizontal scanning circuit 111, the reading circuit 112, the output circuit 114, and the control pulse generation unit 115 are arranged so as to overlap with the region between the edge of the sensor substrate 11 and the edge of the pixel region 12.

In other words, the sensor substrate 11 has the pixel region 12 and a non-pixel region arranged around the pixel region 12. Then, in a plan view, the vertical scanning circuit 110, the horizontal scanning circuit 111, the reading circuit 112, the output circuit 114, and the control pulse generation unit 115 are disposed in the region that overlaps with the non-pixel region.

It should be noted that the arrangement of the vertical signal lines 113, the reading circuit 112, and the output circuit 114 is not limited to the example shown in FIG. 3. For example, the vertical signal lines 113 may be arranged so as to extend in the row direction, and the reading circuit 112 may be arranged at the ends of the extended vertical signal lines 113. In addition, the signal processing circuit 103 need not be provided for each of all photoelectric conversion units, and a configuration in which one signal processing circuit is shared by a plurality of photoelectric conversion units and in which signal processing is performed sequentially is possible.

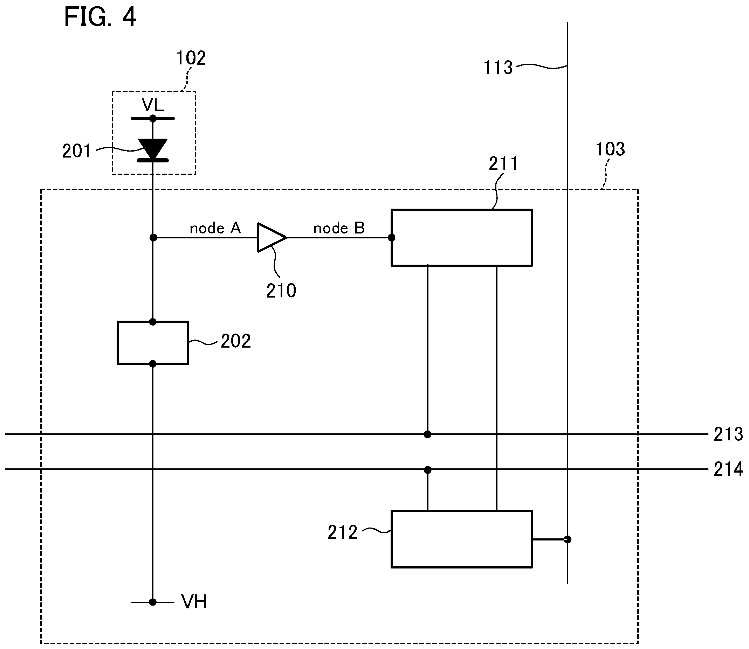

FIG. 4 is a diagram showing an example of an equivalent circuit of the pixel 101 in FIG. 2 and FIG. 3, and the photoelectric conversion unit 102 and the signal processing circuit 103 included in the pixel 101. As shown in FIG. 4, each pixel 101 is respectively provided with a photoelectric conversion unit 102 serving as a sensor unit, a counter circuit 211, a memory circuit 212, and the like.

The APD 201 included in the photoelectric conversion unit 102 generates, through photoelectric conversion, a charge pair corresponding to incident light. One node of the two nodes of the APD 201 (the anode) is connected to a power line to which a voltage VL (first voltage) is supplied. In addition, the other node of the two nodes of the APD 201 (the cathode) is connected to a power line to which a voltage VH (second voltage) higher than the voltage VL is supplied.

A reverse bias voltage is applied to the anode and cathode of the APD 201 so that the APD 201 performs an avalanche multiplication operation. By establishing a state in which such a voltage is applied, the charge generated by the incident light causes avalanche multiplication, and an avalanche current is generated.

It should be noted that, in a case in which a reverse bias voltage is supplied, there are the Geiger mode, in which the APD 201 operates with a voltage difference between the anode and cathode greater than the breakdown voltage, and the Linear mode, in which the APD 201 operates with a voltage difference between the anode and cathode that is near, or less than or equal to, the breakdown voltage. An APD operated in Geiger mode is called a single-photon avalanche diode (SPAD). In the case of a SPAD, the voltage VL (the first voltage) is set to, for example, -30V, and the voltage VH (the second voltage) is set to, for example, 1V.

The signal processing circuit 103 includes a quenching element 202, a waveform shaping unit 210, the counter circuit 211, and the memory circuit 212. The quenching element 202 is connected to a power line to which the voltage VH is supplied and to one node of the anode or cathode of the APD 201.

The quenching element 202 functions as a load circuit (quenching circuit) at the time of signal amplification due to avalanche multiplication, and acts to suppress the voltage supplied to the APD 201 so as to suppress avalanche multiplication (quenching operation). In addition, the quenching element 202 has the function of restoring the voltage supplied to the APD 201 back to the voltage VH by flowing a current equivalent to the voltage drop caused by the quenching operation (recharging operation).

In the equivalent circuit shown in FIG. 4, the signal processing circuit 103, in addition to the quenching element 202, includes the waveform shaping unit 210, the counter circuit 211, and the memory circuit 212.

The waveform shaping unit 210 shapes a voltage change of the cathode of the APD 201 that is obtained when a photon is detected. Then, the waveform shaping unit 210 outputs a pulse signal. For example, an inverter circuit is used as the waveform shaping unit 210. Although FIG. 4 shows an example in which one inverter is used as the waveform shaping unit 210, a circuit in which a plurality of inverters are connected in series may also be used, or another circuit having a waveform shaping effect may also be used.

The counter circuit 211 counts the number of pulses output from the waveform shaping unit 210, and holds the count value. In addition, when the control pulse RES is supplied via a driving line 213, the signal held in the counter circuit 211 is reset. Here, the counter circuit 211 generates an image signal based on the difference between the count value at the start time and the end time of the accumulation period.

To the memory circuit 212, a control pulse SEL is supplied from the vertical scanning circuit 110 of FIG. 3 via a driving line 214 of FIG. 4 (not shown in FIG. 3), thereby switching the electrical connection and disconnection between the counter circuit 211 and the vertical signal line 113. The memory circuit 212 functions as a memory that temporarily stores the count value of the counter and outputs the output signal from the counter circuit 211 of the pixel to the vertical signal line 113.

It should be noted that a switch, such as a transistor, may be provided between the quenching element 202 and the APD 201, or between the photoelectric conversion unit 102 and the signal processing circuit 103, and the electrical connection may be switched. Similarly, the supply of the voltage VH or the voltage VL supplied to the photoelectric conversion unit 102 may be electrically switched by using a switch such as a transistor.

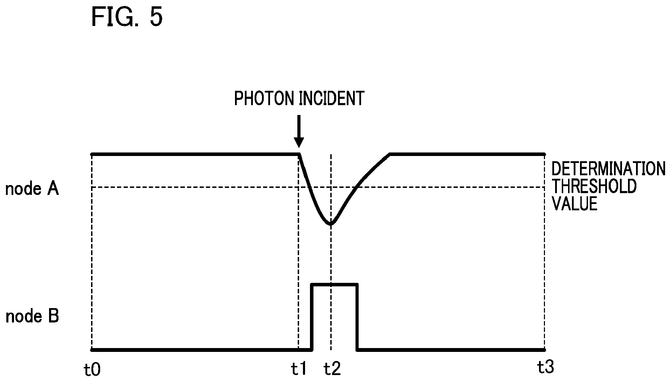

FIG. 5 is a diagram schematically showing the relationship between the operation of the APD 201 and an output signal. The input side of the waveform shaping unit 210 is referred to as "node A", and the output side thereof is referred to as "node B". Between time t0 and time 11, a potential difference between the voltage VH and the voltage VL is applied to the APD 201. When a photon is incident on the APD 201 at time 11, avalanche multiplication occurs in the APD 201, an avalanche multiplication current flows to the quenching element 202, and the voltage at node A drops.

As the voltage drop increases further, and the potential difference applied to the APD 201 decreases, the avalanche multiplication of the APD 201 stops at time t2, and the voltage level of node A does not drop below a certain value.

Thereafter, between time t2 and time t3, a current that compensates for the voltage drop from the voltage VL flows through node A, and at time t3, node A remains at the original potential level. At this time, a portion of the output waveform in node A that exceeds a certain threshold is waveform-shaped by the waveform shaping unit 210, and this shaped waveform is then output as a pulse signal at node B.

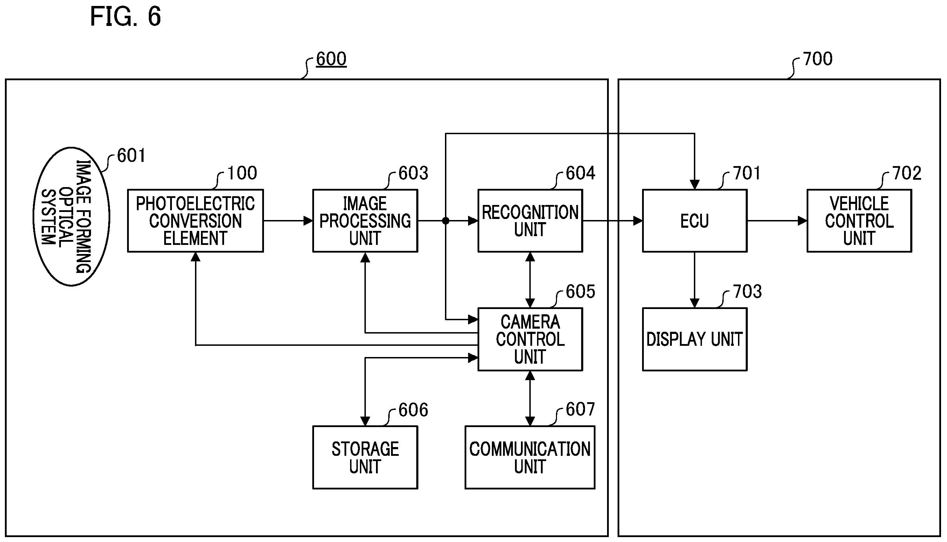

Next, the photoelectric conversion apparatus 600 and the movable apparatus 700 according to the Present Embodiment will be explained. FIG. 6 is a functional block diagram of the photoelectric conversion apparatus 600 and the movable apparatus 700 according to the Present Embodiment. It should be noted that some of the functional blocks shown in FIG. 6 are implemented by causing a computer (not shown), which is included in the photoelectric conversion apparatus 600 and the movable apparatus 700, to execute a computer program stored in a memory (not shown) as a storage medium.

However, some or all of these functional blocks may be implemented in hardware. As hardware, a dedicated circuit (ASIC), a processor (reconfigurable processor, DSP), or the like can be used. In addition, the functional blocks shown in FIG. 6 may not be incorporated within the same enclosure and can be configured by separate devices connected to each other via signal paths.

The photoelectric conversion apparatus 600 includes the photoelectric conversion element 100 explained in FIG. 1 to FIG. 5, an image forming optical system 601, an image processing unit 603, a recognition unit 604, a camera control unit 605, a storage unit 606, a communication unit 607, and the like. The photoelectric conversion element 100 is configured by the avalanche photodiode explained in FIG. 1 to FIG. 5 for the photoelectric conversion of an optical image.

The photoelectric conversion apparatus of the Present Embodiment is mounted on a movable apparatus 700, and a camera unit consisting of a set of the image forming optical system 601 and the photoelectric conversion element 100 is arranged so as to capture at least one direction of the front, the rear, or a side of the movable apparatus, for example. It should be noted that a plurality of camera units may be installed on the movable apparatus 700.

The image processing unit 603 performs image processing on the image signal acquired by photoelectric conversion element 100, such as black level correction, gamma curve adjustment, noise reduction, digital gain adjustment, demosaicing, and data compression, and then generates a final image signal. It should be noted that in a case in which each pixel of the photoelectric conversion element 100 includes an on-chip color filter such as RGB, processing such as white balance correction, and color conversion is also performed in the image processing unit 603.

Furthermore, in a case in which the read image is used for a plurality of purposes, such as for visual purposes or recognition purposes, it is desirable to store in advance different image processing parameters for each use purpose of the image, and switch the image processing parameters upon the switch of the use purpose of the image.

The output of the image processing unit 603 is supplied to the recognition unit 604, an Electric Control Unit (ECU) 701 of the movable apparatus 700, and the camera control unit 605. The recognition unit 604 performs image recognition based on an image signal, and thereby recognizes and identifies the type of subjects around the movable apparatus 700, such as people, animals, vehicles, traffic lights, and signs.

At that time, the reliability that indicates the accuracy of the recognition results, and the coordinate information that indicates the position and size of the subject in the image are also acquired together. Specifically, as coordinate information, the offset and size of the X coordinate, and the offset and size of the Y coordinate are acquired. In the Present Embodiment, although three types of information of the subject type, the reliability, and the coordinate information are acquired as recognition results, other information may also be acquired.

The recognition results acquired by the recognition unit 604 are output to the ECU 701. It should be noted that in the Present Embodiment, although the movable apparatus 700 is explained by using the example of an automobile, the movable apparatus can be any type of movable object, such as an airplane, train, ship, drone, AGV, or robot.

The camera control unit 605 incorporates a CPU serving as a computer and a memory that stores a computer program, and performs control of various parts of the photoelectric conversion apparatus 600 by the CPU executing the computer program stored in the memory.

It should be noted that the camera control unit 605, for example, performs control and the like of the length of the accumulation period (photoelectric conversion period) of each frame of the photoelectric conversion element 100 and the timing of a control signal CLK via the control pulse generation unit of the photoelectric conversion element 100. In addition, the camera control unit 605 sets various image processing parameters in the image processing unit 603, and has the function of controlling the recognition unit 604 and the function of acquiring recognition results.

The storage unit 606 includes a storage medium, such as a memory card or hard disk, and can store and read an image signal. The communication unit 607 is provided with a wireless or wired interface, and outputs generated image signals and recognition results to the outside of the photoelectric conversion apparatus 600, and receives various signals from the outside.

It should be noted that the communication unit 607, serving as an interface, may for example perform wired communication following standards such as SPI and I2C, or may perform communication by using wireless LAN methods such as Wi-Fi and Bluetooth (registered trademark).

The ECU 701 incorporates a CPU serving as a computer and a memory that stores a computer program, and performs control of various parts of the movable apparatus 700 by the CPU executing the computer program stored in the memory.

The output of the ECU 701 is supplied to a vehicle control unit 702 and a display unit 703. The vehicle control unit 702 functions as a moving control unit that controls the movement (such as driving, stopping, and direction control) of the vehicle serving as the movable apparatus based on the output of the ECU 701. In addition, the vehicle control unit 702, which serves as the moving control unit, performs control of the movable apparatus based on the recognition result that has been output from the recognition unit.

In addition, the display unit 703 includes a display element such as, for example, a liquid crystal device or organic EL, and is mounted on the movable apparatus 700. Based on the output from the ECU 701, the display unit 703 displays various information to the driver of the movable apparatus 700 by using, for example, a GUI, such as images acquired by the photoelectric conversion element 100, recognition results acquired from the recognition unit 604, and the travel state of the vehicle.

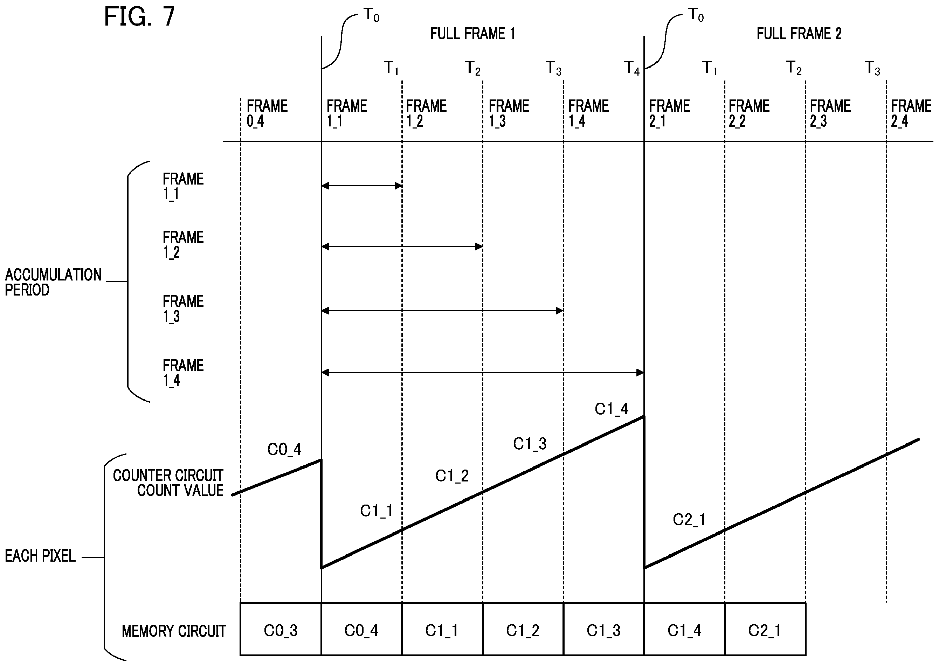

FIG. 7 is a diagram for explaining an example of processing of photoelectric conversion by the camera control unit 605 according to the embodiment. In the Present Embodiment, photoelectric conversion is, for example, driven periodically at 30 full frames per second. In addition, a frame of one vertical period of 33.3ms in length is referred to as a "full frame", and each of the four divisions of a full frame is referred to as a "frame".

That is, as shown in FIG. 7, a full frame 1 is divided into frame 1_1, frame 1_2, frame 1_3, and frame 1_4, each of equal duration (8.33ms). Then, the count value is read from the counter circuit 211 at time T₁, which is the end of frame 1_1; at time T₂, which is the end of frame 1_2; at time T₃, which is the end of frame 1_3; and at time T₄, which is the end of frame 1_4. In contrast, a reset of the counter circuit 211 is performed at T₀ (T₄), which is the end of the full frame period (one vertical period).

Therefore, the count value C1_1 read from the counter circuit 211 at time T₁, which is the end of frame 1_1, becomes the count value of the accumulation period from time T₀ to time T₁. In addition, the count value C1_2 read from the counter circuit 211 at time T₂, which is the end of frame 1_2, becomes the count value for the accumulation period from time T₀ to time T₂.

In addition, the count value C1_3 read from the counter circuit 211 at time T₃, which is the end of frame 1_3, becomes the count value for the accumulation period from time T₀ to time T₃. Furthermore, the count value C1_4 read from the counter circuit 211 at time T₄, which is the end of frame 1_4, becomes the count value for the accumulation period from time T₀ to time T₄.

First, the processing flow of the image that is read from the counter circuit 211 at time T₁, which is the end of frame 1_1, will be explained. At time T₀, the counter circuit 211 is reset, and at time T₁, the count value C1_1 of the counter circuit 211 is acquired. The acquired count value C1_1 is temporarily stored in the memory circuit 212.

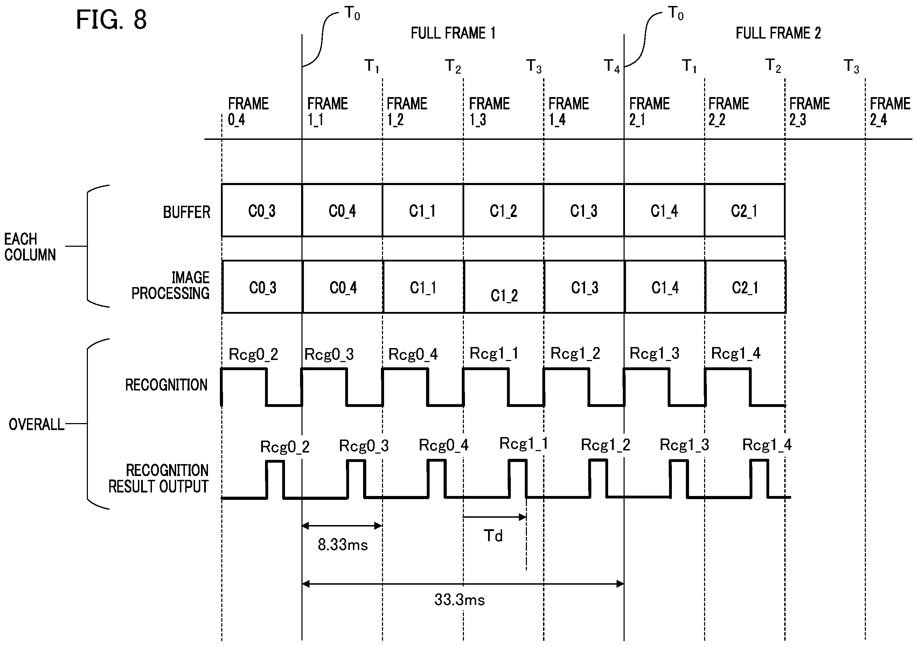

FIG. 8 is a diagram for explaining an example of the recognition processing by the camera control unit 605 according to the embodiment. The count value C1_1 that was temporarily stored in the memory circuit 212 is output to the image processing unit 603 line by line via the buffers inside the reading circuit 112 from the photoelectric conversion element during the period from time T₁ to time T₂.

In the image processing unit 603, the various types of image processing described above are performed, and the processing results are directly output to the recognition unit 604. The image of frame 1_1 is output to the recognition unit 604 during the period from time T₁ to time T₂, and the output of the image signals of all the lines is completed at the timing of time T₂. Then, at the timing of time T₂, subject recognition processing is started in the recognition unit 604.

It should be noted that in the Present Embodiment, although recognition processing starts at the timing of time T₂, at which the image signal for one frame is fully ready, it is possible to perform the recognition processing sequentially, line-by-line or pixel-by-pixel. By reducing the processing unit for recognition, it is possible to shorten the delay time until recognition results are acquired.

Then, simultaneously with the completion of the recognition processing of the image of frame 1_1, the recognition results are promptly output to the ECU 701. In the Present Embodiment, Td denotes the shortest time required for the recognition processing and the output of the results therefrom. At this time, the output of the recognition result (Rcg1_1 in FIG. 8) based on the image of frame 1_1 is completed at the timing of time T₂ + Td.

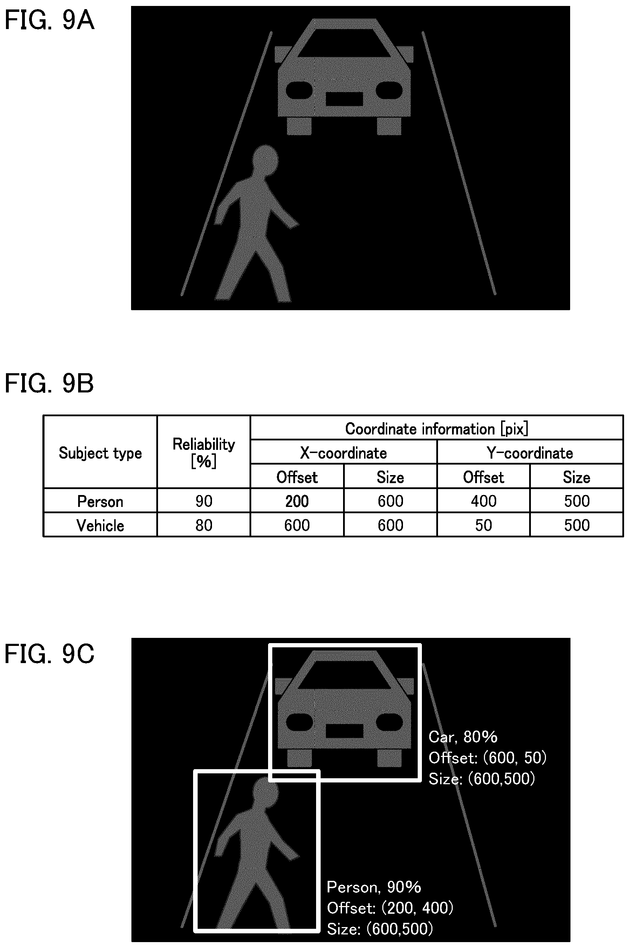

FIGS. 9A to 9C are diagrams for explaining the recognition processing by the recognition unit 604 according to the embodiment, and the details of the recognition processing will be explained by using FIG. 9. FIG. 9A is a diagram showing an example of an image that is output from the image processing unit 603 to the recognition unit 604 at the timing of time T2. A road extends in the vertical direction in the image, and a vehicle is shown in the upper part of the image, and a person who has jumped out onto the road is shown in the lower left part of the image.

FIG. 9B is a diagram showing an example of the results of subject recognition processing performed by the recognition unit 604 for frame 1_1. As shown in FIG. 9B, in frame 1_1, two subjects are recognized, and the recognition unit 604 outputs data information for each subject, including subject type, reliability of image recognition, and coordinate information.

That is, the subject type of the first recognized subject is "person", and the reliability of image recognition is 90%. In addition, the coordinate information of the pixel region in which the "person" is recognized has an X-coordinate offset of 200px and a Y-coordinate offset of 400px, and an X-coordinate size of 600px and a Y-coordinate size of 500px. That is, it can be understood that the X-coordinate exists in the range of 200 to 800px and the Y-coordinate exists in the range of 400 to 900px.

That is, the subject type of the second recognized subject is "vehicle", and the reliability of image recognition is 80%. In addition, the coordinate information of the pixel region in which the "vehicle" is recognized has an X-coordinate offset of 600px and a Y-coordinate offset of 50px, and an X-coordinate size of 600px and a Y-coordinate size of 500px. That is, it can be understood that the X-coordinate exists in the range of 600 to 1200px and the Y-coordinate exists in the range of 50 to 550px.

Thus, the recognition unit 604 can output the information that the recognition unit 604 has acquired, as shown in FIG. 9B, to the ECU 701 at the timing of T₂ + Td. Therefore, it is possible to supply the recognition results to the ECU 701 of the movable apparatus 700 in the shortest time (Td) from the start of recognition to the output of the recognition results.

It should be noted that in the Present Embodiment, as the top priority for reducing delay time, the data information of FIG. 9B is supplied to the ECU 701. However, other information may also be supplied together to the ECU 701 as necessary. For example, as shown in FIG. 9C, the ECU 701 may also be supplied with information in which the recognition results shown in FIG. 9B are superimposed as information on the image signal of FIG. 9A.

Alternatively, only the images of the regions in which the subjects have been recognized (within the white frames in FIG. 9C) may be cut out and supplied to the ECU 701 together with the recognition results. However, because supplying the ECU 701 with this image information as well increases the volume of data, there is a concern that transmission to the ECU 701 may require time.

That is, the delay time until the completion of the output of the recognition results may be extended. Therefore, it is desirable to determine the content of the information supplied from the photoelectric conversion apparatus 600 to the ECU 701 in consideration of the information required by the movable apparatus 700, the allowable delay time, and the like. This concludes the explanation of the image processing flow of frame 1_1.

Next, the reading of the image signal of frame 1_2 is started at the end of frame 1_2 at time T₂, the reading of the image signal of frame 1_3 is started at the end of frame 1_3 at time T₃, and the reading of the image signal of frame 1_4 is started at the end of frame 1_4 at time T₄. And the image signal of frame 1_2 is sequentially read from time T₂ to time T₃, the image signal of frame 1_3 is read from time T₃ to time T₄, and the image signal of frame 1_4 is read from time T₄ to time T₁ of the full frame 2. Then, the recognition processing for frame 1_2 is started at the timing of time T₃, the recognition processing of frame 1_3 is started at the timing of time T₄, and the recognition processing of frame 1_4 is started at the timing of time T₁, and the supply of the recognition results to the ECU 701 for frame 1_2 is completed at the timing of time T₃ + Td, for frame 1_3 at the timing of time T₄ + Td, and for frame 1_4 at the timing of time T₁ + Td.

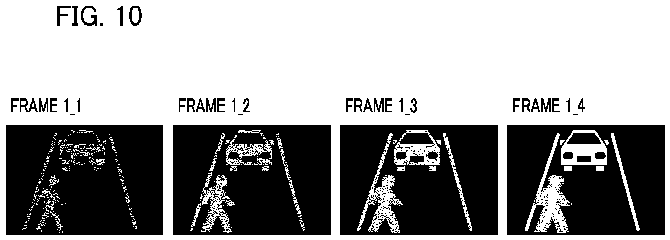

FIG. 10 is a diagram showing examples of images of a plurality of divided frames. As shown in FIG. 9, the image read at the time T1 of the end of frame 1_1 becomes dark because the accumulation period is short, but there is little subject blur of the person who has jumped out onto the road.

In contrast, because images read at the end of each of frame 1_2, frame 1_3, and frame 1_4 have sequentially longer accumulation periods, subject blur is more likely to be generated. It should be noted that blur is less likely to be generated in stationary vehicles or white lines, and the longer the accumulation period, the easier it is to improve contrast.

Thus, in the Present Embodiment, within one full frame period, there are held a first accumulation period (for example, from time T₀ to time T₁) and a second accumulation period (for example, from time T₀ to time T₄), and the first accumulation period is shorter than the second accumulation period. Furthermore, the signal generated during the first accumulation period is controlled so as to be output between the end of the first accumulation period (for example, time T₁) and the end of the second accumulation period (for example, time T₄).

In addition, in the Present Embodiment, the first accumulation period and the second accumulation period overlap each other, and the first accumulation period and the second accumulation period start simultaneously. Furthermore, the end time of the second accumulation period denotes the separation of the full frame period (one vertical period), and the second accumulation period is an integer multiple of the first accumulation period (four times in the example of FIG. 7).

However, the second accumulation period is not required to be an integer multiple of the first accumulation period, and the second accumulation period need only be longer than the first accumulation period and the end of the second accumulation period need only be later than the end of the first accumulation period.

That is, an image with a short accumulation period and an image with a long accumulation period are created, and the timing of the end of the short accumulation period is set to be earlier than the timing of the end of the long accumulation period, and as soon as the short accumulation period ends, the image with the short accumulation period is subsequently output to a recognition unit. Then, the subject is recognized based on the signal that is generated during at least the first accumulation period. The recognition unit 604 serving as a recognition unit recognizes the subject based on the signal that is generated during at least the first accumulation period.

Therefore, whereas conventionally, image recognition could only be performed once per full frame period, in the Present Embodiment, image recognition can be performed every 1/4 full frame period, enabling rapid recognition of obstacles, for example, when a movable apparatus is traveling at high speed. In addition, in a case in which the accumulation period is further shortened, it becomes possible to perform image recognition more frequently.

Furthermore, by performing output of those recognition results to the ECU 701 with low latency, it is possible to quickly apply automatic braking and the like. Alternatively, it becomes possible to avoid obstacles early. In addition, because image recognition can be performed every 1/4 full frame period, timely image recognition of any obstacles and the like that appear during that interval is possible.

In addition, the display apparatus of the Present Embodiment displays the signals that are generated during at least the second accumulation period as images. It should be noted that because images from the second accumulation period, which has a long accumulation period, are able to improve contrast, they are suitable as images for display. That is, images of the short first accumulation period are suitable for rapid subject recognition, and images of the long second accumulation period are suitable as images for display.

It should be noted that in the Present Embodiment, because an APD is used, unlike a CMOS sensor or the like, the charge accumulated by the reading operation does not degrade, and it is possible to overlap accumulation periods. In addition, because there is no reading noise, the original signal does not degrade regardless of how many times the original signal is read during a single accumulation.

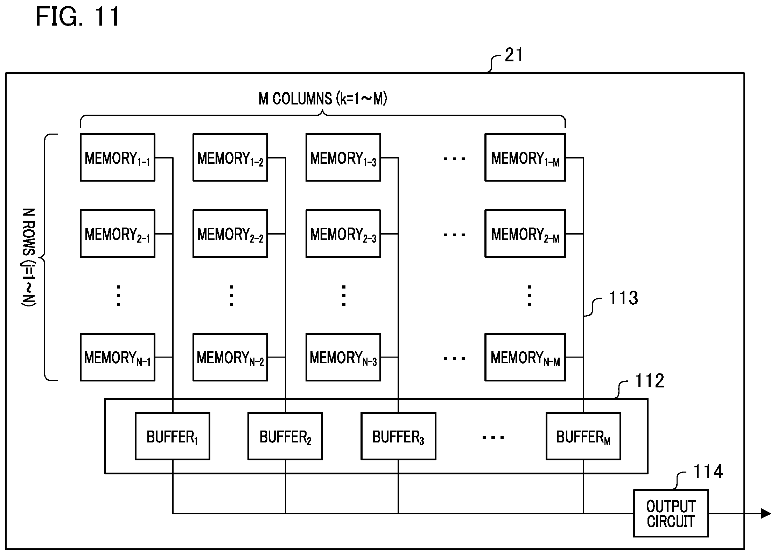

FIG. 11 is a diagram showing the relationship between the memory circuits and the buffers in the embodiment. In FIG. 11, the memory circuits 212 within the signal processing circuit 103 of FIG. 3 are shown in a state arrayed in N rows and M columns, and each memory circuit is represented as memoryi-i to memory_{N-M}. In addition, buffer₁ to buffer_{M} in FIG. 11 represent the buffers included in the reading circuit 112 of FIG. 3. The output circuit 114 in FIG. 11 corresponds to the output circuit 114 of FIG. 3.

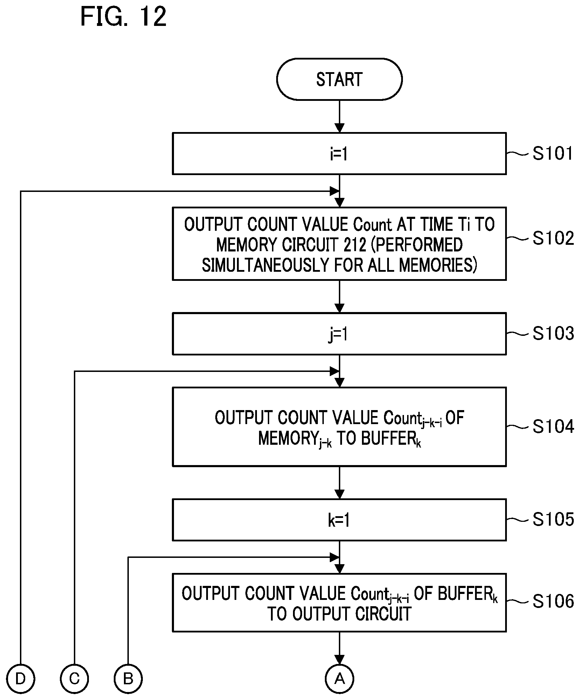

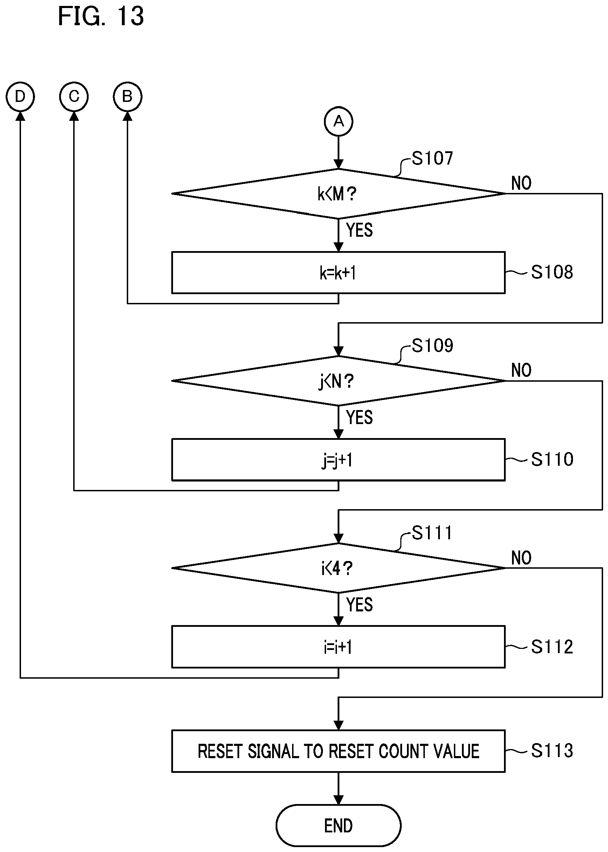

FIG. 12 is a flowchart showing the details of a driving example of a photoelectric conversion element in the embodiment, and FIG. 13 is a continuation of the flowchart of FIG. 12. It should be noted that the operation of each step of the flowcharts of FIGS. 12 and 13 is performed sequentially by executing a computer program stored in a memory by a CPU and the like serving as a computer within the camera control unit 605.

In step S101 of FIG. 12, i is set to 1. Next, in step S102, the count value Count of the counter circuit 211 at time Ti is output to the memory circuit 212. At this time, the output is performed simultaneously for all pixel memory circuits. This operation corresponds to the operation at time T₁ in FIG. 7.

Next, in step S103, j is set to 1, and in step S104, the count value Count(j-k-i) of the memory circuit j-k of FIG. 11 is output to a BUFFER_{K}. At this time, the output to the buffers is performed simultaneously for columns 1 to M. This operation signifies the operation of taking the count values of the first row of FIG. 11 into the buffers.

Next, in step S105, k is set to 1, and in step S106, the count value Count(j-k-i) of the BUFFER_{K} is output to the output circuit 114. This operation corresponds to the operation of reading the signal of the buffer of the leftmost column in FIG. 11 from the output circuit.

Next, the processing proceeds to step S107 of FIG. 13 via A, and in step S107, it is determined as to whether k<M, and if "Yes", then at step S108, k is incremented by 1 as k = k + 1, and the processing then returns to step S106 via B, and the operation of step S106 is performed. This operation corresponds to the operation of reading out the signal from the buffer of the second column from the left in FIG. 11 from the output circuit.

In the case of "No" at step S107, that is, in a case in which k has become equal to M, this signifies that the signal of the M-th buffer in FIG. 11 has been read from the output circuit, and then, the processing proceeds to step S109, and it is determined if j < N. In the case of "Yes" at step S109, j is incremented by 1 as j = j + 1 in step S110, and the processing returns to step S104 via C. This corresponds to the operation of starting the reading of the next row.

In a case in which "No" has been determined at step S109, because this signifies that the reading of all rows has been completed, the processing proceeds to step S111, and whether or not j<4 is determined. In a case in which "Yes" has been determined at step S111, the processing proceeds to step S112, i is incremented by 1 as i = i + 1, and then the processing returns to step S102 via D. This operation corresponds to the operation of starting the reading of the next time T₂.

In a case in which "No" has been determined at step S111, because this signifies that the reading at time T₄ has been completed, the processing proceeds to step S113, and the counter circuit 211 is reset by the reset signal. This operation corresponds to the reset operation of the counter circuit 211 at time T₄ in FIG. 7. In this manner, it is possible to sequentially read the signals accumulated in the photoelectric conversion element 100.

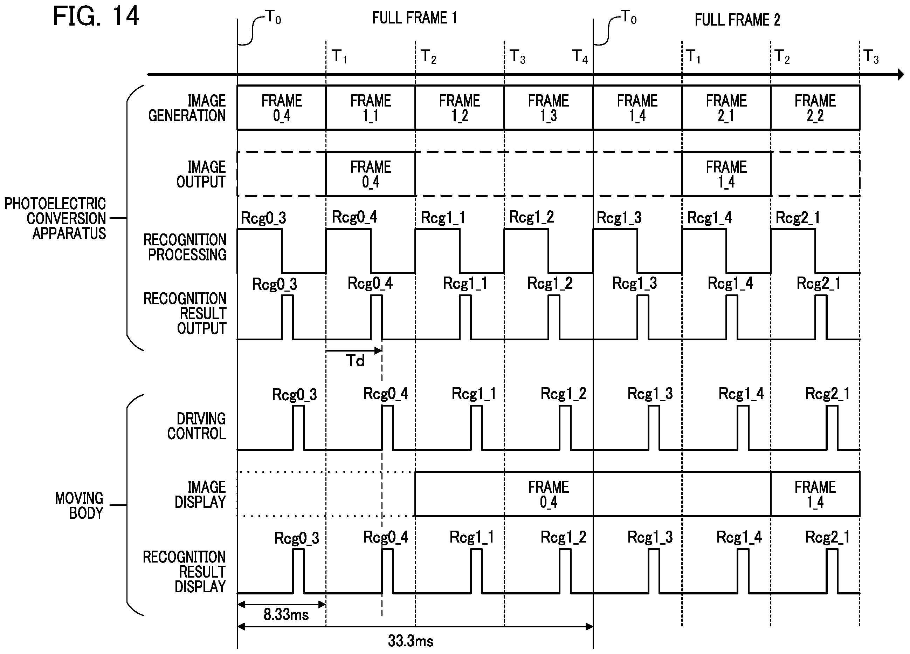

FIG. 14 is a diagram for explaining an example of a specific control method of the movable apparatus 700 by the ECU 701 according to the embodiment. In FIG. 14, the control method of the photoelectric conversion apparatus 600 is similar to that of FIG. 7, wherein a full frame is divided into four frames of equal duration, and the duration of each frame corresponds to the frame duration of FIG. 7.

In FIG. 14, the processing of each frame from the time at which the image signal is read from the reading circuit 112 within the photoelectric conversion element 100 until the final image is generated by the image processing unit 603 is defined as "image generation".

In addition, in the Present Embodiment, as shown in "Image Output" of FIG. 14, only the image signals of frame 0_4 and frame 1_4, which have the longest accumulation period (33.3ms), are output from the image processing unit 603 to the ECU 701 as images for display on the display unit 703 of the movable apparatus 700.

In addition, recognition processing by the recognition unit 604 is performed for all frames, and the results of that recognition processing are supplied from the recognition unit 604 to the ECU 701 ("Recognition Result Output" in FIG. 14). The recognition results are displayed on the display unit 703 of the movable apparatus 700, or are used for driving control by the vehicle control unit 702 ("Driving Control" in FIG. 14).

It should be noted that in a case in which a subject has not been recognized in the recognition processing, it is not always necessary to output the recognition results to the ECU 701, and as described below, it is sufficient to output the results as necessary.

Next, the process of outputting an image for display from the photoelectric conversion apparatus 600 to the movable apparatus 700 and displaying the image on the display unit 703 by the ECU 701 will be sequentially explained. In FIG. 14, at the timing of time T1 of full frame 1, various image processing is performed by the image processing unit 603 within the photoelectric conversion apparatus 600, and the final "Image Generation" of frame 0_4 is performed.

Next, in the period from time T₁ to time T₂, the image signal of frame 0_4 is "Image Output" horizontal line by line from the image processing unit 603 to the ECU 701 and is temporarily stored in a memory (not shown). At the timing of time T₂, when the image signal of frame 0_4 has been fully acquired, the ECU 701 starts the "Image Display" of the image signal of frame 0_4 on the display unit 703.

Because the image displayed on the display unit 703 is updated once every full frame period (four-frame period), the image of frame 0_4 updated at the time T₂ of full frame 1 continues to be "Image Displayed" until the time T₂ of full frame 2.

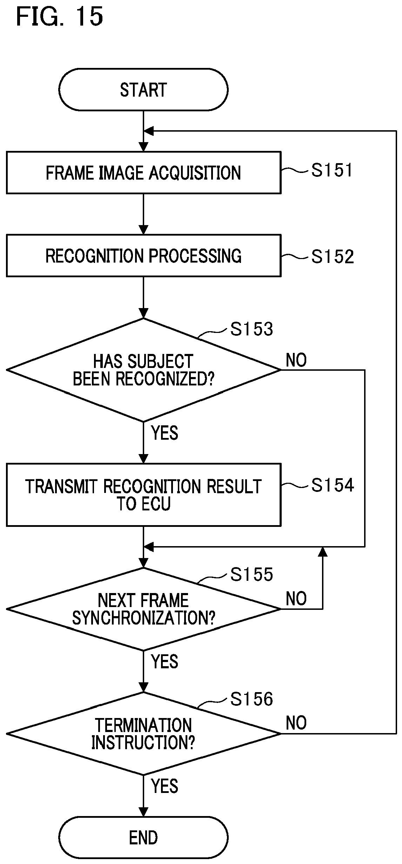

Next, the results of subject recognition performed by the recognition unit 604 are output to the movable apparatus 700, and the processing of the recognition results until the ECU 701 performs control of the vehicle control unit 702 and the display unit 703 will be explained by using FIG. 14 and FIG. 15.

It should be noted that FIG. 15 is a flowchart showing an example of a control method of subject recognition and the like according to the embodiment. The operations of each step of the flowchart of FIG. 15 are sequentially performed by executing a computer program stored in a memory by a CPU and the like serving as a computer within the camera control unit 605.

In step S151 of FIG. 15, at the timing of time T₁ of full frame 1, the recognition unit 604 acquires the image of frame 0_4. Then, in step S152, the recognition unit 604 begins "recognition processing" of the subject, and acquires the recognition result (Rcg0_4) as shown in FIG. 14. Here, step S152 functions as a recognition step that performs recognition processing on the image signal generated based on the difference in the count value of the counter at a start time and an end time of the accumulation period.

Then, in step S153, it is determined whether the subject has been recognized. In a case in which "No" has been determined at step S153, the processing proceeds to step S155, and in a case in which "Yes" has been determined at step S153, the processing proceeds to step S154.

In step S154, the recognition unit 604 starts transmitting the recognition processing result Rcg0_4 to the ECU 701 by interrupt processing. The transmission of the recognition processing result Rcg0_4 completes at the timing of time T₁ + Td ("Recognition Result Output" in FIG. 14).

Here, step S154 functions as a control step that causes the results of the recognition processing to be output to an external unit such as the ECU 701 by the camera control unit 605 upon the completion of the recognition processing by the recognition step (recognition unit).

The ECU 701 transmits a signal for performing vehicle control to the vehicle control unit 702 at the timing of T₁ + Td, which is the time at which Rcg0_4 was acquired. The vehicle control unit 702, based on the received vehicle control signal, performs driving, stopping, steering control, and the like of the movable apparatus 700 ("Driving Control" in FIG. 14).

Thus, by performing control of the movable apparatus 700 immediately after receiving Rcg0_4, even if an obstacle enters while the movable apparatus is moving at high speed, it becomes possible to perform driving control such as applying brakes quickly or changing the course in order to avoid the obstacle promptly.

In addition, at almost the same time as transmitting the vehicle control signal from the ECU 701 to the vehicle control unit 702, the ECU 701 transmits the acquired information of Rcg0_4 to the display unit 703 as recognition result information. The display unit 703 superimposes information such as the subject type, reliability, and coordinate information as shown in FIG. 9C on the displayed image by using a GUI or the like, based on the received recognition result information ("Recognition Result Display" in FIG. 14).

With respect to coordinate information, although it is desirable to display an image frame or the like so that it is visually easy for the driver to see, a display method other than an image frame is also acceptable. In addition, it is desirable that the colors displayed are easy for the driver to see. In this way, by transmitting and displaying the recognition result information to the display unit 703 immediately after the ECU 701 receives Rcg0_4, the driver can be promptly informed of approaching subject or obstacle information.

In the Present Embodiment, from the timing of T₂ of full frame 1, the image of frame 0_4 accumulated in full frame 0 is displayed on the display unit 703. However, before the display image switches from full frame 0 to full frame 1, it is possible to preemptively receive and display the recognition results of Rcg1_1, Rcg1_2, Rcg1_3, and Rcg1_4 on the display unit 703.

It should be noted that the image of frame 0_4, which began transmission at step S154, is initially stored in a memory (not shown), and then is displayed after time T₂. However, as described above, images displayed on the display unit 703 are images of each full frame such as frame 0_4 and frame 1_4, and in the Present Embodiment, images of frames obtained in the interval between these full frames are not used for display.

It should be noted that following step S154, in step S155, the processing waits until the synchronization signal of the next frame arrives, and upon arrival, the processing proceeds to step S156. In step S156, for example, a termination instruction by the user or a termination instruction by turning off the power supply of the image capturing apparatus is determined, and in a case in which the determination is "Yes", the flow of FIG. 15 is terminated.

In a case in which "No" has been determined at step S156, the processing returns to step S151, and the above-described series of operations is repeated. Thereby, it is possible to perform new recognition processing sequentially based on an image acquired in each frame, and to display those recognition results on the currently displayed image, or to reflect those recognition results in driving control.

Thus, it is possible to notify the driver and the vehicle control unit 702 of subject information at a shorter cycle and earlier timing than the update cycle of the image. That is, in a case in which a subject or obstacle has approached, because it is possible to quickly apply the brakes or change course, it becomes possible to avoid danger.

In addition, in the Present Embodiment, the content to be output is determined according to the recognition results of the subject, and whether or not the results of the recognition processing are output to the outside is switched according to whether or not the subject has been recognized by the recognition unit. That is, in a case in which a subject has been recognized from the image signal of a predetermined period by a recognition unit, the image signal of the predetermined period is also output to the outside, together with the results of the recognition processing.

Moreover, for example, when the subject has been recognized by the recognition unit 604, the recognition result is displayed by superimposing the recognition result on the image signal and, in a case in which the subject is not recognized, only the image signal is displayed. Thus, it is possible to prevent the display from becoming cluttered for the driver of the movable apparatus.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

For example, in the above-described embodiment, although the image signal and the recognition results were output by using separate signal lines, they may be output by using the same signal line. That is, the image signal and the recognition results may be simultaneously output by using the output signal line from the image processing unit 603 to the ECU 701.

Alternatively, the image signal and the recognition results may be simultaneously output by using the output signal line from the recognition unit 604 to the ECU 701. Or, either one or both types of information may be output by using the communication unit 607 via the camera control unit 605.

In addition, as a part or the whole of the control according to the embodiments, a computer program realizing the function of the embodiments described above may be supplied to the photoelectric conversion apparatus and the like through a network or various storage media. Then, a computer (or a CPU, an MPU, or the like) of the photoelectric conversion apparatus and the like may be configured to read and execute the program. In such a case, the program and the storage medium storing the program configure the present invention.

In addition, the present invention includes those realized using at least one processor or circuit configured to perform function of the embodiments explained above, for example. Dispersion processing may be performed using a plurality of processors.

This application claims the benefit of priority from Japanese Patent Application No. 2023-088760, filed on May 30, 2023, which is hereby incorporated by reference herein in its entirety.

## Claims

1. A photoelectric conversion apparatus comprising:
a plurality of pixels, each provided with a sensor unit configured to generate pulses corresponding to photons, a counter that counts the number of pulses, and a memory that stores a count value of the counter; and
a recognition unit configured to perform recognition processing on an image signal generated based on the difference in the count value of the counter at a start time and an end time of an accumulation period; and
a control unit configured to output the results of the recognition processing.

2. The photoelectric conversion apparatus according to claim 1, wherein the control unit, during a full-frame period which has a first accumulation period and a second accumulation period, output a signal generated during the first accumulation period between the end of the first accumulation period and the end of the second accumulation period,
wherein the first accumulation period being shorter than the second accumulation period.

3. The photoelectric conversion apparatus according to claim 1 or claim2, wherein the control unit switches whether or not to output the results of the recognition processing, according to whether or not a subject has been recognized by the recognition unit.

4. The photoelectric conversion apparatus according to any one of claims 1 to 3, wherein the control unit output the image signal with the results of the recognition processing, in a case where an object is recognized from the image signal by the recognition unit.

5. The photoelectric conversion apparatus according to any one of claims 1 to 4, wherein the sensor unit includes an avalanche photodiode.

6. A movable apparatus comprising:
a plurality of pixels, each provided with a sensor unit configured to generate pulses corresponding to photons, a counter that counts the number of pulses, and a memory that stores a count value of the counter; and
a recognition unit configured to perform recognition processing on an image signal generated based on the difference in the count value of the counter at a start time and an end time of an accumulation period;
a control unit configured to output the results of the recognition processing; and
a moving control unit configured to control an operation of the movable apparatus.

7. The movable apparatus according to claim 6, wherein the moving control unit performs control of the movable apparatus based on the recognition results that is output from the recognition unit.

8. The movable apparatus according to claim 6 or claim 7, further comprises a display unit for displaying the results of the recognition processing.

9. A control method of a photoelectric conversion apparatus comprising a plurality of pixels, each provided with a sensor unit configured to generate pulses corresponding to photons, a counter that counts the number of pulses, and a memory that stores a count value of the counter, wherein the control method comprises:
performing recognition processing on an image signal generated based on the difference in the count value of the counter at a start time and an end time of an accumulation period, and
outputting the results of the recognition processing.

10. A computer-readable storage medium configured to store a computer program for controlling a photoelectric conversion apparatus comprising a plurality of pixels, each provided with a sensor unit that generates pulses at a frequency corresponding to the frequency at which photons are incident, a counter that counts the number of these pulses, and a memory that stores the count value of the counter,
wherein the computer program comprises instructions for executing the following processes:
performing recognition processing on an image signal generated based on the difference in the count value of the counter at a start time and an end time of an accumulation period, and
outputting the results of the recognition processing.
